# EUROPÄISCHE PATENTSCHRIFT

(11) **EP 1 599 515 B1**
(45) Veröffentlichungstag und Bekanntmachung des Hinweises auf die Patenterteilung: **13.01.2010**
(21) Anmeldenummer: 04717081.6
(22) Anmeldetag: 04.03.2004
(51) Int. Cl.: C08F 214/06

(54) **THERMOSTABILE VINYLCHLORID-MISCHPOLYMERISATE**
THERMOSTABLE VINYLCHLORIDE MIXED POLYMERS
POLYMERISATS MIXTES DE CHLORURE DE VINYLE THERMOSTABLE

(30) Priorität: 06.03.2003 DE 10309858
(43) Veröffentlichungstag der Anmeldung: 30.11.2005
(73) Patentinhaber: Wacker Chemie AG, 81737 München (DE); Vinnolit GmbH & Co. KG, 85737 Ismaning (DE)
(72) Erfinder: KAISER, Stephan, 84503 Altötting (DE); HOHENADEL, Robert, 84543 Winhöring (DE); WEBER, Karl, 84579 Unterneukirchen (DE); ZENK, Franz, 84508 Burgkirchen (DE); STROHMEIER, Claudia, 84552 Geratskirchen (DE)
(74) Vertreter: Schuderer, Michael
(86) Internationale Anmeldenummer: PCT/EP2004/002212
(87) Internationale Veröffentlichungsnummer: WO 2004/078805

(56) Entgegenhaltungen:
- EP-A- 0 264 916
- EP-A- 0 760 379
- EP-A- 1 153 979
- US-A- 4 707 411
- US-A- 4 900 777
- US-A- 4 985 314

## Beschreibung

Die Erfindung betrifft ein Verfahren zur Herstellung von thermostabilen Vinylchlorid-Mischpolymerisaten, Verfahren zu deren Herstellung, und deren Anwendung insbesondere in Lackharz-Zusammensetzungen.

Ein großes Problem bei der Anwendung von Vinylchlorid-Mischpolymerisaten ist die unzureichende Stabilität von Lösungen dieser Polymerisate in organischen Lösungsmitteln, insbesondere in Ketonen. In warmen Regionen mit einer Umgebungstemperatur von mehr als 30°C tritt bereits nach wenigen Tagen der Lagerung solcher Lösungen eine Gelb- und Braun-Verfärbung der ursprünglich farblosen Lösungen auf. Ebenfalls problematisch ist die Lagerung von pulverförmigen Harzen auf Basis von Vinylchlorid-Mischpolymerisaten bei erhöhten Temperaturen. Hier kann es bereits nach wenigen Monaten Lagerzeit zur Verfärbung des Pulvers kommen, was dann zur Verfärbung von Lösungen dieser Pulver führt.

Als Ursache für die Tendenz zur Verfärbung von Lösungen von Vinylchlorid-Mischpolymerisaten gilt die mangelnde Thermostabilität dieser Mischpolymerisate. Negative Erscheinungen sind auch Korrosionserscheinungen in Form von Rostbildung an Metallteilen von Maschinen und Lagerbehältern, welche mit Lösungen von Vinylchlorid-Mischpolymerisaten in Kontakt kommen.

In der EP-B 358067 wird vorgeschlagen zur Verbesserung der Vergilbungsresistenz Vinylchlorid-Mischpolymerisate mit 1 bis 20 Gew.-% Glycidylmethacrylat und 12 bis 40 Gew.-% weiterer Comonomere einzusetzen. Aus der EP-B 219097 ist bekannt, die Thermostabilität dadurch zu verbessern, dass Vinylchlorid mit OH-funktionellen Acrylaten, Epoxid-haltigen Comonomeren und Säure-funktionellen Comonomeren copolymerisiert wird. Für die Epoxid-haltigen Comonomere wie Glycidylmethacrylat wird empfohlen, diese in einer Menge von 1 bis 12 Gew.-% einzusetzen. Ähnliche Copolymerisate sind Gegenstand der EP-B 264916, in der ein Gehalt von weniger als 0.5 Gew.-% Epoxidgruppen, dies entspricht etwa 1.7 Gew.-% Glycidylmethacrylat, als unzureichend für die Verbesserung der Thermostabilität beschrieben wird.

Vor diesem Hintergrund lag der Erfindung die Aufgabe zugrunde, thermostabile Vinylchlorid-Mischpolymerisate zur Verfügung zu stellen.

Gegenstand der Erfindung ist ein Verfahren zur Herstellung von Vinylchloridmischpolymerisaten mittels radikalisch initiierter (Suspensionspolymerisation oder Emulsionspolymerisation) eines Gemisches aus Vinylchlorid, Epoxid-haltigen Vinylmonomeren, sowie weiteren damit copolymerisierbarer Comonomere, dadurch gekennzeichnet, dass
a) 49.5 bis 90 Gew.-% Vinylchlorid,
b) 0.01 bis 0.7 Gew.-% Epoxid-haltige Vinylmonomere, und
c) 9.5 bis 50 Gew.-% weitere mit a) und b) copolymerisierbare Comonomere polymerisiert werden, wobei sich die Angaben in Gew.-% auf 100 Gew.-% aufaddieren, siehe zusammenfassung und das Vinylchlorid misch polymerisat als Festharz isoliert wird.

Geeignete Epoxid-haltige Vinylmonomere b) sind beispielsweise Methylglycidylmethacrylat, Methylglycidylacrylat, Allylglycidylether, Allylphenolglycidylether, Glycidylmethacrylat. Bevorzugt wird Glycidylmethacrylat (GMA). Vorzugsweise werden 0.01 bis 0.5 Gew.-%, besonders bevorzugt 0.1 bis 0.4 Gew.-% Epoxid-haltige Vinylmonomere copolymerisiert.

Geeignete copolymerisierbare Comonomere c) sind ein oder mehrere ethylenisch ungesättigte Monomere aus der Gruppe umfassend Vinylester von unverzweigten oder verzweigten Alkylcarbonsäuren mit 1 bis 18 C-Atomen, Acrylsäureester oder Methacrylsäureester von verzweigten oder unverzweigten Alkoholen oder Diolen mit 1 bis 18 C-Atomen, ethylenisch ungesättigte Mono- und Di-Carbonsäuren sowie deren Anhydride.

Bevorzugte Vinylester sind solche von Carbonsäuren mit 1 bis 12 C-Atomen. Besonders bevorzugt werden Vinylacetat, Vinylpropionat, Vinylbutyrat, Vinyl-2-ethylhexanoat, Vinyllaurat, 1-Methylvinylacetat, Vinylpivalat und Vinylester von α-verzweig-ten Monocarbonsäuren mit 9 bis 13 C-Atomen, beispielsweise VeoVa9^{R} oder VeoVa10^{R} (Handelsnamen der Firma Shell). Am meisten bevorzugt ist Vinylacetat.

Bevorzugte Monomere aus der Gruppe Acrylsäureester oder Methacrylsäureester sind Ester von unverzweigten oder verzweigten Alkoholen mit 1 bis 15 C-Atomen. Besonders bevorzugte Methacrylsäureester oder Acrylsäureester sind Methylacrylat, Methylmethacrylat, Ethylacrylat, Ethylmethacrylat, Propylacrylat, Propylmethacrylat, n-Butylacrylat, n-Butylmethacrylat, t-Butylacrylat, t-Butylmethacrylat, 2-Ethylhexylacrylat. Am meisten bevorzugt sind Methylacrylat, Methylmethacrylat, n-Butylacrylat, t-Butylacrylat und 2-Ethylhexylacrylat.

Beispiele für geeignete ethylenisch ungesättigte Mono- und Di-Carbonsäuren sowie deren Anhydride sind Acrylsäure, Methacrylsäure, Fumarsäure, Itaconsäure, Crotonsäure, Maleinsäure, Maleinsäureanhydrid.

Die radikalisch initiierte Polymerisation kann mittels, Suspensionspolymerisation und Emulsionspolymerisation erfolgen. Die Polymerisationstemperatur beträgt im allgemeinen 20°C bis 75°C. Die Initiierung der Polymerisation kann mit den gebräuchlichen wasserlöslichen bzw. monomerlöslichen Initiatoren oder Redox-Initiator-Kombinationen erfolgen. Beispiele für wasserlösliche Initiatoren sind die Natrium-, Kalium- und Ammoniumsalze der Peroxodischwefelsäure. Beispiele für monomerlösliche Initiatoren sind Dicetylperoxydicarbonat, Dicyclohexylperoxydicarbonat, Dibenzoylperoxid und tert.-Butylperoxypivalat. Die genannten Initiatoren werden im allgemeinen in einer Menge von 0.01 bis 1.0 Gew.-%, bevorzugt 0.1 bis 0.5 Gew.-%, jeweils bezogen auf das Gesamtgewicht der Monomere, eingesetzt. Bei der Lösungspolymerisation werden organische Lösungsmittel wie Ethylacetat eingesetzt. Bei den Verfahren der Suspensions- und Emulsionspolymerisation wird in Wasser in Gegenwart von oberflächenaktiven Substanzen wie Schutzkolloiden und/oder Emulgatoren polymerisiert. Geeignete Schutzkolloide sind beispielsweise teilverseifte Polyvinylalkohole. Geeignete Emulgatoren sind sowohl anionische, kationische als auch nichtionische Emulgatoren, beispielsweise anionische Tenside, wie Alkylsulfate mit einer Kettenlänge von 8 bis 18 C-Atomen, Alkyl- oder Alkylarylsulfonate mit 8 bis 18 C-Atomen, Ester und Halbester der Sulfobernsteinsäure mit einwertigen Alkoholen oder Alkylphenolen, oder nichtionische Tenside wie Alkylpolyglykolether oder Alkylarylpolyglykolether mit bis zu 60 Ethylenoxid- bzw. Propylenoxid-Einheiten.

Zur Steuerung des Molekulargewichts können während der Polymerisation regelnde Substanzen eingesetzt werden. Falls Regler eingesetzt werden, werden diese üblicherweise in Mengen zwischen 0.02 bis 10.0 Gew.-%, bezogen auf die zu polymerisierenden Monomeren, eingesetzt und separat oder auch vorgemischt mit Reaktionskomponenten dosiert. Beispiele solcher Substanzen sind halogenierte Alkane und halogenierte Alkene wie Tetra-chlorkohlenstoff, Chloroform, Methylchlorid, Trichlorethylen sowie Aldehyde wie Acetaldehyd, Propionaldehyd, Butyraldehyd und Isobutyraldehyd.

Vorzugsweise wird in Gegenwart von Propionaldehyd polymerisiert. Propionaldehyd hat gegenüber anderen Reglern wie etwa Trichlorethylen den Vorteil, dass mit geringeren Mengen bereits eine regelnde Wirkung erzielt wird. Bevorzugt wird es daher, je nach erwünschtem Molekulargewicht, in einer Menge von 0.02 bis 5 Gew.-%, bezogen auf Monomer, zugegeben. Nachteilig beim Einsatz von Propionaldehyd war, dass damit gefärbte Produkte erhalten werden. Überraschenderweise wurde festgestellt, dass bei der erfindungsgemäßen Vorgehensweise, in Gegenwart von Epoxid-haltigen Vinylmonomeren und (Iso)-ascorbinsäure, keine Verfärbung auftritt.

Die Monomere können insgesamt zudosiert werden oder in Anteilen vorgelegt werden und der Rest nach der Initiierung der Polymerisation zudosiert werden. Die Dosierungen können separat (räumlich und zeitlich) durchgeführt werden oder die zu dosierenden Komponenten können alle oder teilweise voremulgiert dosiert werden. In einer bevorzugten Ausführungsform werden die Epoxid-haltigen Vinylmonomere insgesamt absatzweise oder besonders bevorzugt insgesamt kontinuierlich zudosiert.

Nach Abschluß der Polymerisation kann zur Restmonomerentfernung in Anwendung bekannter Methoden nachpolymerisiert werden, beispielsweise durch mit Redoxkatalysator initiierter Nachpolymerisation. Flüchtige Restmonomere können auch mittels Destillation, vorzugsweise unter reduziertem Druck, und gegebenenfalls unter Durchleiten oder Überleiten von inerten Schleppgasen wie Luft, Stickstoff oder Wasserdampf entfernt werden.

Während oder nach der Polymerisation werden 0.001 bis 0.1 Gew.-% eine oder mehrere Carbonsäuren aus der Gruppe umfassend aliphatische und alicyclische, gesättigte und ungesättigte Dicarbonsäuren mit 1 bis 10 C-Atomen sowie aliphatische und alicyclische, gesättigte und ungesättigte Hydroxy-Mono-, Hydroxy-Di-, Hydroxy-Tri-Carbonsäuren mit 3 bis 10 C-Atomen und 1 bis 4 Hydroxygruppen zugegeben. Die Zugabe erfolgt vorzugsweise nach Abschluß der Monomerdosierung sowie vor, während oder nach der Restmonomerentfernung. Beispiele für Dicarbonsäuren sind Oxalsäure, Malonsäure, Bernsteinsäure, Glutarsäure, Adipinsäure, sowie Maleinsäure und Fumarsäure. Besonders bevorzugt werden die genannten Hydroxycarbonsäuren, beispielsweise Tartronsäure, Äpfelsäure, Weinsäure, Zitronensäure, Iso-Zitronensäure, Ascorbinsäure, Iso-Ascorbinsäure.

Am meisten bevorzugt werden Ascorbinsäure und Iso-Ascorbinsäure, insbesondere Kombinationen von Ascorbinsäure oder Iso-Ascorbinsäure mit Zitronensäure. Die Menge an (Iso)-Ascorbinsäure und Zitronensäure beträgt dabei vorzugsweise jeweils von 0.001 bis 0.1 Gew.-%, insbesondere 0.005 bis 0.05 Gew.-%, jeweils bezogen auf das Gesamtgewicht der Comonomere.

Das gemäß diesem Verfahren erhaltene Vinylchlorid-Mischpolymerisat kann mit üblichen Verfahren durch Ausfällen, Filtrieren und anschließender Trocknung isoliert werden

Die Vinylchlorid-Mischpolymerisate eignen sich beispielsweise als Bindemittel für Lacke, besonders in Heißsiegellacken, beispielweise zur Aluminiumbeschichtung.

Die nachfolgenden Beispiele dienen der weiteren Erläuterung der Erfindung:

### Beispiel 1:

Nach dem Verfahren der Suspensionspolymerisation wurde ein Copolymer mit 83.8 Gew.-% Vinylchlorid, 14.8 Gew.-% Vinylacetat, 1.0 Gew.-% Fumarsäure und 0.4 Gew.-% Glycidylmethacrylat hergestellt, wobei zum Ende der Comonomerdosierung dem Ansatz 0.05 Gew.-% Ascorbinsäure und 0.0075 Gew.-% Zitronensäure zugegeben wurden, jeweils bezogen auf das Gesamtgewicht der Comonomere und jeweils als 10 %-ige wässrige Lösung. Unmittelbar nach dieser Zugabe wurde der Ansatz auf Atmosphärendruck entspannt. Anschließend wurde entmonomerisiert, der Ansatz durch Zugabe von 0.5 Gew.-% Natronlauge neutralisiert, das Copolymer filtriert, gewaschen und getrocknet.
Zur Testung der Thermostabilität wurde eine 20 Gew.-%-ige Lösung des Copolymers in Methylethylketon hergestellt, bei 60°C gelagert, und die Verfärbung der Lösung zeitlich verfolgt. Die Lösung blieb auch nach einer Lagerzeit von einer Woche vollkommen farblos.

### Beispiel 2:

Analog der Vorgehensweise von Beispiel 1 wurde ein Copolymer aus 83.8 Gew.-% Vinylchlorid, 14.8 Gew.-% Vinylacetat, 1 Gew.-% Fumarsäure und 0.4 Gew.-% Glycidylmethacrylat hergestellt. Eine 20 Gew.-%-ige Lösung des Copolymers in Methylethylketon zeigte nach einer Lagerzeit von sechs Tagen bei 60°C eine geringe Verfärbung.

### Beispiel 3:

Es wurde ein Copolymer aus 83.8 Gew.-% Vinylchlorid, 14.8 Gew.-% Vinylacetat, 1 Gew.-% Fumarsäure und 0.4 Gew.-% Glycidylmethacrylat gemäß dem Vorgehen in Beispiel 1 hergestellt, mit dem einzigen Unterschied, dass nur 0.05 Gew.-% Ascorbinsäure (keine Zitronensäure) zugegeben wurden.
Eine 20 Gew.-%-ige Lösung des Copolymers in Methylethylketon zeigte auch nach einer Lagerzeit von einer Woche bei 60°C nur eine sehr schwache Verfärbung.

### Beispiel 4:

Nach dem Verfahren der Emulsionspolymerisation wurde ein Copolymer aus 84.8 Gew.-% Vinylchlorid, 14.8 Gew.-% Vinylacetat und 0.4 Gew.-% Glycidylmethacrylat hergestellt. Zum Reaktionsende wurde auf Atmosphärendruck entspannt, und dem Ansatz 0.02 Gew.-% Ascorbinsäure und 0.0025 Gew.-% Zitronensäure zugegeben, jeweils bezogen auf das Gesamtgewicht der Comonomere und jeweils als 10 %-ige wässrige Lösung. Anschließend wurde entmonomerisiert, und das Copolymerisat gefällt, filtriert, gewaschen und getrocknet.
Eine 20 Gew.-%-ige Lösung des Copolymers in Methylethylketon blieb auch nach einer Lagerzeit von einer Woche bei 60°C vollkommen farblos.

### Vergleichsbeispiel A:

Analog Beispiel 4 wurde mittels Emulsionspolymerisation ein Copolymer aus 85 Gew.-% Vinylchlorid und 15 Gew.-% Vinylacetat hergestellt.
Eine 20 Gew.-%-ige Lösung des Copolymers in Methylethylketon zeigte bereits bei Raumtemperatur eine schwache Verfärbung. Nach 1-tägiger Lagerung bei 60°C zeigte sich eine deutliche Braunfärbung.

### Beispiel 5:

Es wurde analog Beispiel 4 vorgegangen, mit dem Unterschied, dass in Gegenwart von 2 Gew.-% Propionaldehyd, bezogen auf Gesamtmonomer, polymerisiert wurde.
Eine 20 Gew.-%-ige Lösung des Copolymers in Methylethylketon zeigte eine geringere Lösungsviskosität als das Produkt aus Beispiel 4, und blieb auch nach einer Lagerzeit von einer Woche bei 60°C vollkommen farblos.

### Beispiel 6:

Es wurde analog Beispiel 5 vorgegangen, mit dem Unterschied, dass in Gegenwart von 4 Gew.-% Trichlorethylen, bezogen auf Gesamtmonomer, polymerisiert wurde.
Eine 20 Gew.-%-ige Lösung des Copolymers in Methylethylketon zeigte eine ähnliche Lösungsviskosität wie das Produkt aus Beispiel 5, und blieb auch nach einer Lagerzeit von einer Woche bei 60°C vollkommen farblos.

### Vergleichsbeispiel B:

Analog Vergleichsbeispiel A wurde mittels Emulsionspolymerisation ein Copolymer aus 85 Gew.-% Vinylchlorid und 15 Gew.-% Vinylacetat in Gegenwart von 2 Gew.-% Propionaldehyd, bezogen auf Gesamtmonomer, hergestellt. Eine 20 Gew.-%-ige Lösung des Copolymers in Methylethylketon zeigte geringere Lösungsviskosität als eine Lösung des Produkts aus Vergleichsbeispiel A, und bereits bei Raumtemperatur eine schwache Verfärbung.

Der Vergleich von Beispiel 3 mit Beispiel 2 zeigt, dass mit wesentlich geringeren Mengen an GMA als im Stand der Technik, bei Abstoppen der Reaktion mit Ascorbinsäure, aufgrund der synergistischen Wechselwirkung von GMA und Ascorbinsäure ein thermostabiles Produkt erhalten wird.

Beispiel 1 zeigt, dass sich dieser Synergieeffekt mit Zitronensäure sogar noch steigern läßt.

Der Vergleich der Beispiele 5 und 6 und Vergleichsbeispiel B zeigt die vorteilhafte regelnde Wirkung von Propionaldehyd, ohne das eine Verfärbung des Produkts auftritt.

## Patentansprüche

1. Verfahren zur Herstellung von Vinylchloridmischpolymerisaten erhältlich mittels radikalisch initiierter (Suspensions polymerisation oder Emulsions polymerisation) eines Gemisches aus Vinylchlorid, Expoxid-haltigen Vinylmonomeren, sowie, weiteren damit copolymerisierbarer Comonomere, **dadurch gekennzeichnet, dass** a) 49.5 bis 90 Gew.-% Vinylchlorid, b) 0.01 bis 0-7 Gew.-% Epoxid-haltige Vinylmonomere, und c) 9.5 bis 50 Gew.-% weitere mit a) und b) copolymerisierbare Comonomere polymerisiert werden, wobei sich die Angaben in Gew.-% auf 100 Gew.-% aufaddieren, und während oder nach der Polymerisation 0.001 bis 0.1 Gew.-% eine oder mehrere Carbonsäuren aus der Gruppe umfassend aliphatische und alicyclische, gesättigte und ungesättigte Dicarbonsäuren mit 1 bis 10 C-Atomen sowie aliphatische und alicyclische, gesättigte und ungesättigte Hydroxy-Mono-, Hydroxy-Di-; Hydroxy-Tri-Carbonsäuren mit 3 bis 10 C-Atomen und 1 bis 4 Hydroxygruppen zugegeben werden und dass in Gegenwart von 0.02 bis 10 Gew.-%, bezogen auf die zu polymerisierenden Monomere, an regelnden Substanzen, insbesondere Propionaldehyd, polymerisiert wird.

2. Verfahren gemäß Anspruch 1, **dadurch gekennzeichnet, dass** 0.001 bis 0.1 Gew.-% Ascorbinsäure und/oder Iso-Ascorbinsäure, bezogen auf das Gesamtgewicht der Monomere, zugegeben werden.

3. Verfahren gemäß Anspruch 1 oder 2, **dadurch gekennzeichnet, dass** zusätzlich zur Ascorbinsäure und/oder Iso-Ascorbinsäure noch Zitronensäure in einer Menge von 0.001 bis 0.1 Gew.-% insbesondere 0.005 bis 0.05 Gew.-%, bezogen auf das Gesamtgewicht der Comonomere, zugegeben wird.

4. Verfahren gemäß Anspruch 1 bis 3, **dadurch gekennzeichnet, dass** als Comonomere c) ein oder mehrere Vinylester aus der Gruppe umfassend Vinylacetat, Vinylpropionat, Vinylbutyrat, Vinyl-2-ethylhexanoat, Vinyllaurat, 1-Methylvinylacetat, Vinylpivalat und Vinyles-ter von α-verzweigten Monocarbonsäuren mit 9 bis 13 C-Atomen, gegebenenfalls in Kombination mit einem oder mehreren Comonomeren aus der Gruppe umfassend Acrylsäure, Methacrylsäure, Fumarsäure, Itaconsäure, Crotonsäure, Maleinsäure, Maleinsäureanhydrid, copolymerisiert werden.

5. Verfahren gemäß Anspruch 1 bis 4, **dadurch gekennzeichnet, dass** als Comonomere b) ein oder mehrere Epoxid-haltige Vinylmonomere aus der Gruppe umfassend Methylglycidylmethacrylat, Methylglycidylacrylat, Allylglycidylether, Allylphenolglycidylether, Glycidylmethacrylat copolymerisiert werden.

6. Verwendung der Verfahrens produkte nach Anspruch 1 bis 5 als Bindemittel für Lacke.

7. Verwendung nach Anspruch 6 in Heißsiegellacken.

## Claims

1. Process for the preparation of vinyl chloride copolymers obtainable by means of free radical suspension polymerization or emulsion polymerization of a mixture of vinyl chloride, epoxide-containing vinyl monomers and further comonomers copolymerizable therewith, **characterized in that** a) from 49.5 to 90% by weight of vinyl chloride, b) from 0.01 to 0.7% by weight of epoxide-containing vinyl monomers and c) from 9.5 to 50% by weight of further comonomers copolymerizable with a) and b) are polymerized, the data in % by weight summing to 100% by weight, and from 0.001 to 0.1% by weight of one or more carboxylic acids from the group consisting of aliphatic and alicyclic, saturated and unsaturated dicarboxylic acids having 1 to 10 carbon atoms and aliphatic and alicyclic, saturated and unsaturated hydroxymono-, hydroxydi- and hydroxytricarboxylic acids having 3 to 10 carbon atoms and 1 to 4 hydroxyl groups is added during or after the polymerization, and **in that** polymerization is effected in the presence of from 0.02 to 10% by weight, based on the monomers to be polymerized, of regulating substances, in particular propionaldehyde.

2. Process according to Claim 1, **characterized in that** from 0.001 to 0.1% by weight of ascorbic acid and/or isoascorbic acid, based on the total weight of the monomers, is added.

3. Process according to Claim 1 or 2, **characterized in that** citric acid in an amount of from 0.001 to 0.1% by weight, in particular from 0.005 to 0.05% by weight, based on the total weight of the comonomers, is also added in addition to the ascorbic acid and/or isoascorbic acid.

4. Process according to any of Claims 1 to 3, **characterized in that** one or more vinyl esters from the group consisting of vinyl acetate, vinyl propionate, vinyl butyrate, vinyl-2-ethylhexanoate, vinyl laurate, 1-methyl vinyl acetate, vinyl pivalate and vinyl esters of α-branched monocarboxylic acids having 9 to 13 carbon atoms, optionally in combination with one or more comonomers from the group consisting of acrylic acid, methacrylic acid, fumaric acid, itaconic acid, crotonic acid, maleic acid and maleic anhydride, are copolymerized as comonomers c).

5. Process according to any of Claims 1 to 4, **characterized in that** one or more epoxide-containing vinyl monomers from the group consisting of methyl glycidyl methacrylate, methyl glycidyl acrylate, allyl glycidyl ether, allylphenol glycidyl ether and glycidyl methacrylate are copolymerized as comonomers b).

6. Use of the process products according to any of Claims 1 to 5 as binders for coatings.

7. Use according to Claim 6 in heat-seal coatings.

## Revendications

1. Procédé pour la préparation de copolymères de chlorure de vinyle, pouvant être obtenus par polymérisation en suspension ou polymérisation en émulsion, à amorçage radicalaire, d'un mélange de chlorure de vinyle, de monomères vinyliques contenant des époxydes, ainsi que d'autres comonomères copolymérisables avec ceux-ci, **caractérisé en ce qu'**on polymérise a) 49,5 à 90 % en poids de chlorure de vinyle, b) 0,01 à 0,7 % en poids de monomères vinyliques contenant des époxydes, et c) 9,5 à 50 % en poids d'autres comonomères copolymérisables avec a) et b), la somme des données en % en poids étant égale à 100 % en poids, et pendant ou après la polymérisation on ajoute de 0,001 à 0,1 % en poids d'un ou plusieurs acides carboxyliques choisis dans le groupe comprenant des acides dicarboxyliques aliphatiques et alicycliques, saturés et insaturés, ayant de 1 à 10 atomes de carbone ainsi que des acides hydroxy-mono-, hydroxy-di-, hydroxy-tri-carboxyliques aliphatiques et alicycliques, saturés et insaturés, ayant de 3 à 10 atomes de carbone et comportant de 1 à 4 groupes hydroxy, et **en ce qu'**on effectue la polymérisation en présence de 0,02 à 10 % en poids, par rapport aux monomères à polymériser, de substances régulatrices, en particulier de propionaldéhyde.

2. Procédé selon la revendication 1, **caractérisé en ce qu'**on ajoute de 0,001 à 0,1 % en poids d'acide ascorbique et/ou d'acide iso-ascorbique, par rapport au poids total des monomères.

3. Procédé selon la revendication 1 ou 2, **caractérisé en ce qu'**en plus de l'acide ascorbique et/ou de l'acide iso-ascorbique, on ajoute encore de l'acide citrique en une quantité de 0,001 à 0,1 % en poids, en particulier de 0,005 à 0,05 % en poids, par rapport au poids total des comonomères.

4. Procédé selon les revendications 1 à 3, **caractérisé en ce qu'**on copolymérise en tant que comonomère(s) c) un ou plusieurs ester(s) vinylique(s) choisi(s) dans le groupe comprenant l'acétate de vinyle, le propionate de vinyle, le butyrate de vinyle, le 2-éthylhexanoate de vinyle, le laurate de vinyle, l'acétate de 1-méthylvinyle, le pivalate de vinyle et des esters vinyliques d'acides monocarboxyliques α-ramifiés ayant de 9 à 13 atomes de carbone, éventuellement en association avec un ou plusieurs comonomère(s) choisi(s) dans le groupe comprenant l'acide acrylique, l'acide méthacrylique, l'acide fumarique, l'acide itaconique, l'acide crotonique, l'acide maléique, l'anhydride maléique.

5. Procédé selon les revendications 1 à 4, **caractérisé en ce qu'**on copolymérise en tant que comonomère(s) b) un ou plusieurs monomère(s) vinylique(s) contenant des époxydes, choisi(s) dans le groupe comprenant le méthacrylate de méthylglycidyle, l'acrylate de méthylglycidyle, l'éther allylglycidylique, l'éther glycidylique d'allylphénol, le méthacrylate de glycidyle.

6. Utilisation des produits du procédé selon les revendications 1 à 5, en tant que liants pour peintures.

7. Utilisation selon la revendication 6, dans des vernis thermoscellables.
